# EUROPÄISCHE PATENTANMELDUNG

(11) **EP 2 952 369 A1**
(43) Veröffentlichungstag der Anmeldung: **09.12.2015**
(21) Anmeldenummer: 15172021.6
(22) Anmeldetag: 14.02.2012
(51) Int. Cl.: B60G 7/00

(54) **KRAFTFAHRZEUGACHSE MIT VIRTUELLER LENKACHSE**

(30) Priorität: 07.03.2011 DE 102011013265
(62) Teilanmeldung aus: 12155309.3
(71) Anmelder: Benteler Automobiltechnik GmbH, 33102 Paderborn (DE)
(72) Erfinder: Bürger, Manfred, 33181 Bad Wünnenberg (DE); Hemel, Bernd, 33154 Salzkotten (DE); Leontaris, Georgios, Dr, 33106 Paderborn (DE); Niggemeyer, Norbert, 33102 Paderborn (DE); Schultz, Erik, Dr, 33100 Paderborn (DE); van Lengen, Hinderk, Dr, 33619 Bielefeld (DE)
(74) Vertreter: Osterhoff, Utz

(57) **Zusammenfassung**

Die vorliegende Erfindung betrifft eine Kraftfahrzeugachse 1, insbesondere eine Verbundlenkerachse, welche aus einem Torsionsprofil 2 mit daran angebundenen Längsschwingen 3 ausgebildet ist. An den Enden 4 der Längsschwingen 3 ist erfindungsgemäß eine Radaufhängung 5 gelagert, die passive durch Einfederung und/oder Ausfederung des Rades um eine virtuelle Lenkachse gedreht wird. Erfindungsgemäß findet somit jeweils eine Stellung in Vorspur statt, so dass kritische Fahrsituationen weitestgehend vermieden werden.

## Beschreibung

Die vorliegende Erfindung betrifft eine Kraftfahrzeugachse zur Anordnung an einem Kraftfahrzeug gemäß den Merkmalen im Oberbegriff von Patentanspruch 1.

Aus dem Stand der Technik sind Kraftfahrzeugachsen in verschiedensten Bauweisen bekannt. Insbesondere bei Hinterachskonstruktionen sind beispielsweise Doppelquerlenkerachsen, Raumlenkerachsen, Vierpunktlenkerachsen oder aber Integralachsen bekannt. Alle vorbenannten Achstypen bieten die Möglichkeit von umfangreichen Einstellungsmöglichkeiten von Spur, Sturz, Nachlaufwinkel und Spreizung für die Grundeinstellung des Rades. Darüber hinaus kann durch spezielle Anordnung der Achsbauteile zueinander eine Achskinematik erreicht werden, die bei einzelnen in der täglichen Benutzung eines Kraftfahrzeuges auftretenden Fahrmanövern eine entsprechende Einfederung bzw. Ausfederung des Rades ermöglichen und dabei gewünschte Radbeiwerte derart korrigieren, dass stets ein unterkritisches Fahrverhalten gewährleistet wird.

Insbesondere bei hecklastigen Fahrzeugen, beispielsweise Lieferwagen, Kombiwagen oder aber auch Fahrzeugen, in denen der Motor im Heck platziert ist, ist aufgrund der höheren Masse im Bereich der Hinterachse eine Übersteuertendenz vorhanden. Gestützt wird dies weiterhin, wenn zusätzlich ein Heckantrieb vorhanden ist. Um hier eine erhöhte Seitenführungskraft des Rades hervorzurufen, ist es daher möglich, den Sturz oder aber auch die Spur zu ändern. Bei erhöhtem negativem Sturz oder aber erhöhter Vorspur kommt es zu einer Erhöhung der Seitenführungskraft, weshalb beim Einfedern zumindest bei dem Rad auf der kurvenäußeren Seite entweder ein stärkerer negativer Sturz aber eine erhöhte Vorspur, eine erhöhte Seitenführungskraft hervorruft, so dass ein kritischer Fahrzustand bzw. ein Übersteuern vermieden wird.

Aus dem Stand der Technik ist hierzu eine Kraftfahrzeugaufhängung mit virtueller Lenkachse bekannt. Die virtuelle Lenkachse ist auch als Weissachachse bekannt. Hierbei wird bei einer Mehrlenkerachse ein Drehpunkt des Rades, durch den die Lenkachse verläuft, außerhalb der physischen Anbindungspunkte verlegt. In der Regel erfolgt dies durch eine virtuelle Verlängerung der Lenkerarme, so dass die Achse, um die sich das Rad zur Spurkorrektur dreht, virtuell außerhalb des Kraftfahrzeuges verlegt wird. In der Folge wird beim Bremsnicken oder aber auch bei Kurvenfahrten eine Vorspur an der Achse des Fahrzeuges eingestellt, so dass es hier zu einer erhöhten Seitenführungskraft und zu einer Förderung von unterkritischen Fahrzuständen kommt.

Beim Einsatz von in Großserie hergestellten Kraftfahrzeugen, insbesondere bei Klein- oder Kleinstwagen, besteht jedoch der Nachteil, dass eine aufwendige Achskonstruktion, insbesondere eine Hinterachskonstruktion, ohne Antrieb ein zu hohes Eigengewicht mit sich bringt und aufgrund von Material, Erstmontage und Instandhaltungskosten bedeutend zu kostenintensiv ist.

Im Bereich von Klein- und Kleinstwagen kommen insbesondere Verbundlenkerhinterachsen, zum Einsatz. Diese bestehen aus einem Torsionsprofil mit daran angebundenen Längsschwingen, wobei an den freien Enden der Längsschwingen jeweils eine Radaufhängung angeordnet ist. Solche Verbundlenkerachsen sind einfach im Aufbau, kostengünstig zu produzieren und bilden ein geringes Eigengewicht, bei optimalem Fahrkomfort für Klein- und Kleinstwagen.

Beispielsweise ist aus der EP 2 099 627 B1 eine Verbundlenkerhinterachse bekannt, bei der eine Spurkorrektur des Rades durch ein aktives Stellglied über hydroelastische Koppelungsglieder realisiert wird. Hierdurch ist es möglich, eine Spurkorrektur an einer Verbundlenkerhinterachse vorzunehmen. Das System benötigt jedoch aktive Vorrichtungen und Einrichtungen zur Einstellung des hydroelastischen Stellaktuators. Somit ist zum einen eine Messsensorik notwendig, zum anderen eine Aktuatorik. Hierdurch sind die Produktions-, Erstmontage- und Wartungskosten einer solchen Verbundlenkerhinterachse verhältnismäßig hoch. Darüber hinaus sitzt der Großteil der zuvor angesprochenen Sensorik und Aktuatorik auf der Seite der ungefederten Radmassen, was sich negativ auf den Fahrkomfort und die Agilität sowie die Fahrdynamik eines hiermit ausgerüsteten Fahrzeuges auswirkt.

Aufgabe der vorliegenden Erfindung ist es daher, eine Kraftfahrzeugachse bereitzustellen, die eine virtuelle Lenkachse zur Spurkorrektur aufweist und dabei gegenüber aus dem Stand der Technik bekannten Achsanordnungen besonders kostengünstig produzierbar ist und gleichzeitig ein geringes Eigengewicht aufweist.

Die zuvor genannte Aufgabe wird mit einer Kraftfahrzeugachse, insbesondere Verbundlenkerhinterachse gemäß den Merkmalen im Patentanspruch 1 gelöst.

Vorteilhafte Ausführungsvarianten der vorliegenden Erfindung sind Bestandteil der abhängigen Patentansprüche.

Die erfindungsgemäße Kraftfahrzeugachse ist insbesondere eine Verbundlenkerachse, welche aus einem Torsionsprofil mit daran angebundenen Längsschwingen ausgebildet ist, wobei an den freien Enden der Längsschwingen jeweils eine Radaufhängung über mindestens eine elastische Lagerung gekoppelt ist, so dass die Radaufhängung um eine virtuelle Lenkachse schwenkbar gekoppelt ist. Erfindungsgemäß ist die Kraftfahrzeugachse dadurch gekennzeichnet, dass die Radaufhängung über ein Schwenklager mit mindestens einem Rotationsfreiheitsgrad und über zwei Gummimetalllager mit der Längsschwinge gekoppelt ist, wobei sich der Rotationsfreiheitsgrad um die virtuelle Lenkachse dreht und die zwei Gummimetalllagerungen derart angeordnet sind, dass sie einen Federschwerpunkt bilden, der auf das Kraftfahrzeugkoordinatensystem bezogen außerhalb des Kraftfahrzeuges liegt. Der Federschwerpunkt sowie das Schwenklager spannen die Lenkachse auf.

Das Schwenklager weist im Rahmen der Erfindung ausschließlich Rotationsfreiheitsgrade auf, zwingend notwendig ist jedoch nur der Rotationsfreiheitsgrad um die Lenkachse selber. Zur Umsetzung dieser Funktion wären beispielsweise ein Gelenklager, ein Kugelgelenk, ein Gummilager oder aber ein anderes Lager mit mindestens einem Rotationsfreiheitsgrad denkbar. Hierdurch wird ein realer Drehpunkt festgelegt, um die die Radaufhängung sowie ein daran gekoppeltes Rad durch Einstellung von Spur und/oder Sturz schwenkbar sind.

Vorzugsweise verfügen die Gummimetalllager dazu jeweils über eine Längsachse, wobei die Verlängerung der Längsachse den zuvor bereits genannten Federschwerpunkt näherungsweise bildet. Zwischen dem Schwenklager und dem Federschwerpunkt wird somit die Lenkachse aufgespannt, welche wiederum besonders bevorzugt den Radmittelpunkt schneidet. Hierdurch ergibt sich die Möglichkeit, eine passiv betätigte virtuelle Lenkachse an einer Kraftfahrzeugachse, insbesondere an einer Verbundlenkerhinterachse, zu realisieren. Die erfindungsgemäße Anordnung ist besonders geprägt durch ihren einfachen Aufbau, eine günstige Produzierbarkeit sowie eine besondere Wartungsfreiheit während des Betriebes. Die erfindungsgemäße Kraftfahrzeugachse zeichnet sich weiterhin besonders dadurch aus, dass bei erhöhter Zuladung, beispielsweise des Kofferraumes oder aber beim Durchfahren von Bodenwellen, also beim parallelen Einfedern beider an der Achse angeordneten Räder, keine relative Spurkorrektur zwischen Radaufhängung und Längsschwinge erfolgt.

Erfindungsgemäß wird das eigentliche Einfeder- bzw. Ausfederverhalten, also die Aufhängungskinematik der Verbundlenkerachse beibehalten. Eine Spurkorrektur, insbesondere die relative Spurkorrektur zwischen der Radaufhängung und der Längsschwinge, welche durch die erfindungsgemäße Koppelung der Radaufhängung an der Längsschwinge möglich ist, wird dabei nahezu ausschließlich durch Bremskrafteinwirkung, d. h. durch Krafeinwirkung Fx in Kraftfahrzeug X-Richtung erfolgt oder aber durch Seitenkrafteinwirkung Fy, beispielsweise bei Kurvenfahrten.

Bei der Bremskrafteinwirkung erfolgt eine Vorspurkorrektur, wobei ein Standardbremsmanöver bei Geradeausfahrt eine Vorspurkorrektur an beiden Kraftfahrzeugrädern einer Achse hervorruft. Bei Kurvenfahrt erfolgt wiederum bei dem kurvenäußeren Rad eine Vorspurkorrektur und bei dem kurveninneren Rad gegebenenfalls eine Nachspurkorrektur. Diese Spurkorrekturen erfolgen maßgeblich aufgrund der relativen Verlagerung zwischen Radaufhängung und Längsschwinge. Übergreifend wird die jeweilige Koppelungskimenatik der Verbundlenkerachse bei dem jeweiligen Manöver mit ausgeführt.

In einer weiteren bevorzugten Ausführungsvariante der vorliegenden Erfindung ist auf das Kraftfahrzeugkoordinatensystem bezogen, das Schwenklager oberhalb der Gummimetalllager angeordnet, vorzugsweise oberhalb des Radmittelpunktes. Hierdurch wird ein Verlauf der virtuellen Lenkachse derart sichergestellt, der in Kraftfahrzeug Z-Richtung und Y-Richtung analog einem negativen Sturz orientiert ist und in Kraftfahrzeug Z- und X-Richtung vorzugsweise einen negativen Nachlauf aufweist. Vorzugsweise ist die virtuelle Lenkachse weiterhin derart positioniert, dass eine negative Nachlaufstrecke an dem jeweiligen Rad vorhanden ist. Ebenfalls ist es erfindungsgemäß von Vorteil, wenn die virtuelle Lenkachse derart positioniert ist, dass ein negativer Lenkrollradius an dem jeweiligen Rad vorhanden ist.

Bevorzugt ist das Schwenklager als Kugelgelenk ausgebildet. Ein Kugelgelenk weist drei Rotationsfreiheitsgrade auf, wobei maßgeblich oder aber ausschließlich der Rotationsfreiheitsgrad um die virtuelle Lenkachse genutzt wird. Für die unteren Gummimetalllager werden Lagerungen mit hierauf bezogen hoher axialer Steifigkeit und relativ dazu geringer radialer Steifigkeit verwendet. Aufgrund eines betriebsbedingten Verschleißes der Gummimetalllager über die Dauer des Betriebes des Kraftfahrzeuges bietet ein Kugelgelenk jedoch zusätzlich zwei weitere Drehfreiheitsgrade, so dass hier Toleranzen bzw. Schwingungen kompensiert werden können, ohne dass ein Ausschlagen oder ähnliches gegenüber einem Lager mit nur einem Drehfreiheitsgrad vermieden wird. In der Folge ist das System verschleißarm und in der Regel wartungsfrei innerhalb eines Kraftfahrzeuglebens.

Vorzugsweise wird ein Verhältnis von Radialsteifigkeit zu Axialsteifigkeit derart gewählt, dass es zwischen einem Bereich von 1 : 30 bis 1 : 50 liegt. Hierbei ist eine geringe Radialsteifigkeit mit einer dreißig bis fünfzigfach so hohen Axialsteifigkeit im Verhältnis zu sehen. Insbesondere kann das Steifigkeitsverhältnis auch im Bereich zwischen 1 : 35 bis 1 : 45 oder aber insbesondere im Verhältnis von Radialsteifigkeit zu Axialsteifigkeit 1 : 40 ausgebildet sein.

Die axiale Steifigkeit nimmt dabei erfindungsgemäß insbesondere bei erhöhter Krafteinwirkung progressiv zu. Die radiale Steifigkeit verläuft hierzu mit nur geringer Zunahme nahezu linear. Insbesondere wenn die Gummimetalllager vorgespannt eingebaut sind, lässt sich somit das Radial- zu Axialsteifigkeitsverhältnis erhöhen. Hierdurch wird sichergestellt, dass die zwei Gummimetalllager als elastisches System einen Federschwerpunkt bilden, wobei über eine geringe Verdrehsteifigkeit des Ersatzsystems der Federschwerpunkt als Drehpunkt des elastischen Systems aufgefasst werden kann. Die Position des Federschwerpunktes hängt dabei von der Orientierung der elastischen Komponenten ab, sowie dem Radial- zu Axialsteifigkeitsverhältnis der elastischen Komponenten.

Vorzugsweise sind die zwei Gummimetalllager auf das Kraftfahrzeugkoordinatensystem bezogen unterhalb des Schwenklagers angeordnet, besonders bevorzugt unterhalb der Radmitte. Der Bezug unterhalb der Radmitte bedeutet wiederum auf das Kraftfahrzeugkoordinatensystem bezogen nicht, dass es vertikal, also in Z-Richtung direkt unterhalb der Radmitte liegt, sondern kann auch vertikal unter und horizontal versetzt hierzu angeordnet sein. Das in Hauptfahrtrichtung hintere Gummimetalllager ist weiterhin bevorzugt mit seiner Längsachse im Wesentlichen parallel zur Raddrehachse orientiert.

Weiterhin bevorzugt ist das in Fahrtrichtung vorne liegende Gummimetalllager mit seiner Längsachse in einem Winkel α zu der Raddrehachse angeordnet, welcher vorzugsweise in einem Bereich von 10° bis 40°, insbesondere 20° bis 35° und bevorzugt 30° liegt.

In einer weiteren besonders bevorzugten Ausführungsvariante wird jeweils zwischen dem Schwenklager, dem vorderen Gummimetalllager und dem Federschwerpunkt oder aber zwischen dem Schwenklager, dem hinteren Gummimetalllager und dem Federschwerpunkt eine Ebene aufgespannt. Die radiale Richtung des jeweiligen Gummimetalllagers liegt dabei normal zu der jeweils aufgespannten Ebene.

In einer weiteren bevorzugten Ausführungsvariante der vorliegenden Erfindung ist die Radaufhängung ein einschaliges Blechbauteil. Unter der Radaufhängung ist im Rahmen der Erfindung ein Aufhängungsbauteil zu verstehen, welches an die Längsschwinge über die erfindungsgemäße Koppelung angebunden ist. Die Radaufhängung selber kann wiederum einen Radträger aufnehmen oder aber direkt ein Radlager mit entsprechender Radnabe zur Anbindung eines Rades aufweisen. Vorzugsweise ist das Blechbauteil ein Umformbauteil, insbesondere als Warmumform- und Presshärtbauteil ausgebildet. Es kann jedoch auch ein Schmiedeteil oder aber ein Gussbauteil sein. Die Radaufhängung selbst weist wiederum besonders bevorzugt einen Flanschbereich auf, der beispielsweise durch spanende Nachbearbeitung entsprechend präzise hergestellt werden kann.

Die Gummimetalllager sind aus zwei Gummimetallscheibenanordnungen ausgebildet, wobei die Gummimetallscheibenanordnungen jeweils an einer Seite der Radaufhängung angeordnet sind und zusammen mit dieser von einem Schraubbolzen formschlüssig durchgriffen sind. Durch entsprechende Anordnung der Gummimetallscheiben im Verbund ist es möglich, eine hohe axiale Steifigkeit gegenüber einer geringen radialen Steifigkeit, welche optimal für das erfindungsgemäße Betriebsverhalten der Spurkorrektur notwendig sind, einzustellen.

Im Rahmen der Erfindung sollten die Gummimetalllager mit Schorrhärten zwischen 65 und 75 ausgebildet sein. Die Steifigkeitsverhältnisse sollten im Bereich zwischen 10kN/mm und 20 kN/mm, insbesondere bei in etwa 15kN/mm liegen. Die Axialsteifigkeit ist in Relation zur Radialsteifigkeit bevorzugt 40 mal größer zu wählen.

Eine Gummimetallscheibenanordnung ist aus drei Metallscheiben aufgebaut, wobei zwischen die Metallscheiben jeweils eine Gummischicht eingebracht ist. Die Gummischicht kann hier beispielsweise aufvulkanisiert sein oder es können auch Gummischeiben im Verbund mit den Metallscheiben angeordnet sein. Diese können vorzugsweise auch untereinander verklebt sein.

In einer weiteren bevorzugten Ausführungsvariante sind die Gummimetalllageranordnungen vorgespannt, wobei die Gummischicht zumindest bereichsweise gegenüber den Metallscheiben vorstehend ausgebildet ist. Hierdurch lassen sich insbesondere hohe axiale Steifigkeiten bei geringer radialer Steifigkeit einstellen.

In einer weiteren bevorzugten Ausführungsvariante ist an die Radaufhängung ein Radträger anschraubbar, wobei der Radträger vorzugsweise relativ gegenüber der Radaufhängung justierbar ist. Hierbei ist es möglich, Produktionstoleranzen der Verbundlenkerachse, der Radaufhängung oder aber der Aufhängung durch eine Voreinstellung von Spur und Sturz des Radträgers gegenüber der Radaufhängung einzustellen. Während des Betriebsverhaltens selbst sind die Radaufhängung und der Radträger als schubstarre Einheit ausgebildet. In einer weiteren bevorzugten Ausführungsvariante ist die Radaufhängung gegenüber der Längsschwinge justierbar, vorzugsweise über einen exzentrischen Versatz des Kugelgelenks. Hierbei ist es möglich, eine Spur- und/oder Sturzkorrektur über die elastisch gelagerte Radaufhängung vorzunehmen. Hierüber können weiterhin die sich im Betriebsverhalten einstellende Spurkorrektur in ihrer Intensität, bezogen auf den Einfeder- bzw-Ausfederweg, derart eingestellt werden, dass sich keine relativen Spurkorrekturwerte einstellen, sondern diese sich nahezu ausschließlich aus der Federungskinematik der Verbundlenkerachse ergibt.

Beispielsweise ist es somit möglich, eine Hinterachskonstruktion, im Nutzfahrzeugbau, zu verwenden, bei der durch verschiedene Aufbauten des Nutzfahrzeuges Massenunterschiede des Leergewichtes des Kraftfahrzeuges von bis zu 1000 kg auftreten können. Entsprechend muss für jede Aufbauvariante individuell eine Spurkorrekturanstimmung vorgenommen werden. Weitere Vorteile, Merkmale, Eigenschaften und Aspekte der vorliegenden Erfindung sind Bestandteil der folgenden Beschreibung. Eine bevorzugte Ausführungsform wird in den schematischen Figuren dargestellt. Diese dient dem einfachen Verständnis der Erfindung. Es zeigen:
- Figur 1: eine erfindungsgemäße Kraftfahrzeugachse mit radaufhängiger perspetivischen Ansicht;
- Figur 2: die Kraftfahrzeugachse in einer Draufsicht;
- Figur 3: die Kraftfahrzeugachse in einer Seitenansicht;
- Figur 4: die Kraftfahrzeugachse in einer Stirnansicht;
- Figur 5: eine Schnittansicht durch einen erfindungsgemäße Befestigung eines Gummimetalllagers gemäß Schnittansicht A-A aus Figur 2;
- Figur 6: eine Gummimetalllageranordnung;
- Figur 7: eine Metalllageranordnung mit Vorspannung;
- Figur 8a - c: verschiedene Fahreinflüsse auf das Rad und
- Figur 9: eine Federkennlinie der Gummimetalllageranordnung.

In den Figuren werden für gleiche oder ähnliche Bauteile dieselben Bezugszeichen verwendet, auch wenn eine wiederholte Beschreibung aus Vereinfachungsgründen entfällt.

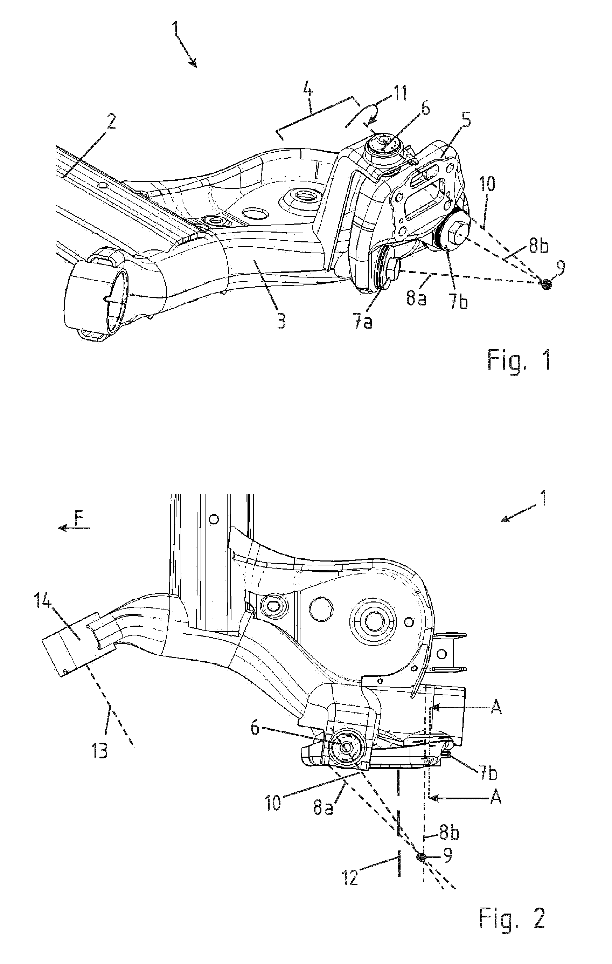

Figur 1 zeigt eine erfindungsgemäße Kraftfahrzeugachse 1, die aus einem Torsionsprofil 2 mit daran gekoppelter Längsschwinge 3 ausgebildet ist. Am Ende 4 des Torsionsprofils 2 ist eine Radaufhängung 5 erfindungsgemäß elastisch über ein Schwenklager 6 sowie zwei Gummimetalllager 7 gekoppelt. Die Gummimetalllager 7a, 7b weisen jeweils eine Längsachse 8a, 8b auf, die sich in einem Federschwerpunkt 9 auf ein Kraftfahrzeugkoordinatensystem bezogen außerhalb des Kraftfahrzeuges schneiden. Der Schnittpunkt 9 sowie das Schwenklager 6 bilden eine virtuelle Lenkachse 10, um die sich ein hier nicht näher dargestelltes Rad schwenkt. Das Schwenklager 6 selber weist dabei einen Rotationsfreiheitsgrad 11 auf, wobei sich der Rotationsfreiheitsgrad 11 um die virtuelle Lenkachse 10 dreht.

Figur 2 zeigt die erfindungsgemäße Kraftfahrzeugachse 1 in einer Draufsicht. Hierbei ist zu erkennen, dass das auf die Fahrtrichtung F bezogene hintere Gummimetalllager 7b eine Längsachse 8b aufweist, die parallel zu einer hier skizziert eingezeichneten Raddrehachse 12 orientiert verläuft. Die Längsachse 13 des vorderen Gummimetalllagers 7a weist hierzu einen Winkel α zur Raddrehachse auf. Der Winkel α liegt dabei zur Raddrehachse nach Maßgabe in der XY-Ebene des Kraftfahrzeugkoordinatensystems. Ebenfalls in Figur 2 zu erkennen ist, dass von dem Schwenklager 6 aus, die virtuelle Lenkachse 10 durch den Federschwerpunkt 9 verläuft.

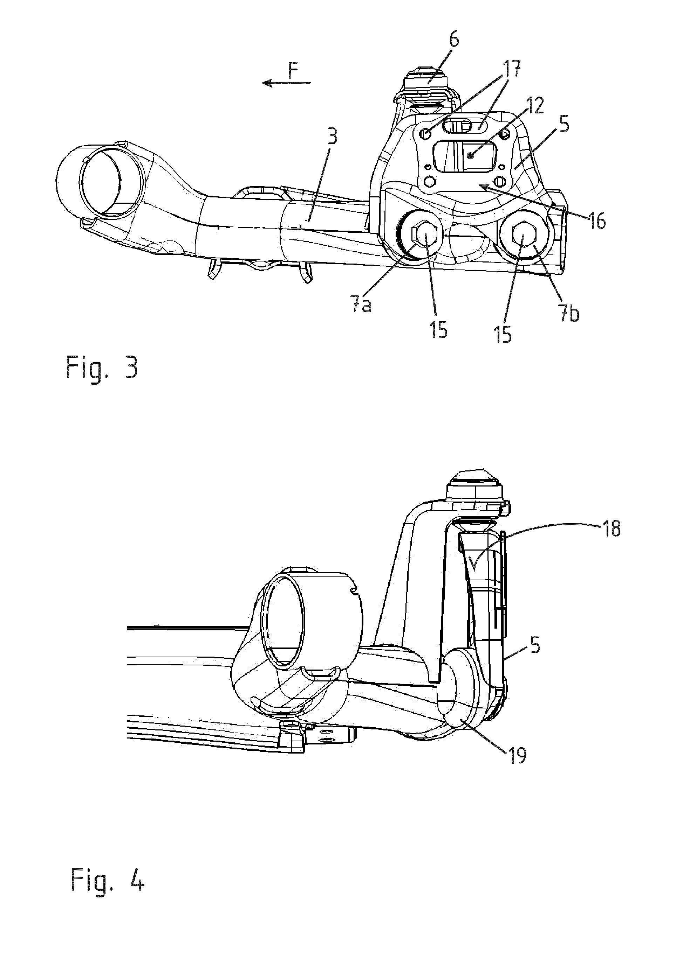

Figur 3 zeigt eine Seitenansicht, in der insbesondere die Radaufhängung 5 kenntlich wird. Das Schwenklager 6 ist oberhalb der in Figur 3 angedeuteten Raddrehachse 12 angeordnet, wohingegen das Gummimetalllager 7a in Fahrtrichtung F vor der Raddrehachse 12 und das Gummimetalllager 7b in Fahrtrichtung F hinter der Raddrehachse 12 angeordnet ist. Die Gummimetalllager 7a, 7b sind jeweils über Schraubbolzen 15 mit der Längsschwinge 3 gekoppelt. Die Radaufhängung 5 weist weiterhin einen Flanschbereich 16 auf, an dem ein hier nicht näher dargestellter Radträger koppelbar ist. Der Flanschbereich 16 weist dazu verschiedene Montageöffnungen 17 auf, so dass der nicht näher dargestellte Radträger justierbar ist.

Figur 4 zeigt eine Frontansicht der erfindungsgemäß elastisch gelagerten Radaufhängung 5, wobei zu erkennen ist, dass diese von einer umlaufenden Verstärkungskante 18 sowohl in ihrer Biegesteifigkeit als auch in ihrer Torsionssteifigkeit verstärkt ist. An den Enden der Längsschwinge 3 sind weiterhin Aufnahmen 19 vorgesehen, an die die hier nicht näher erkennbaren Gummimetalllager gekoppelt werden. Die Aufnahmen 19 erstrecken sich dabei trichterförmig, so dass eine möglichst große hier nicht näher dargestellte Anlagefläche zwischen Aufnahme 19 und Gummimetalllager 7 hergestellt wird.

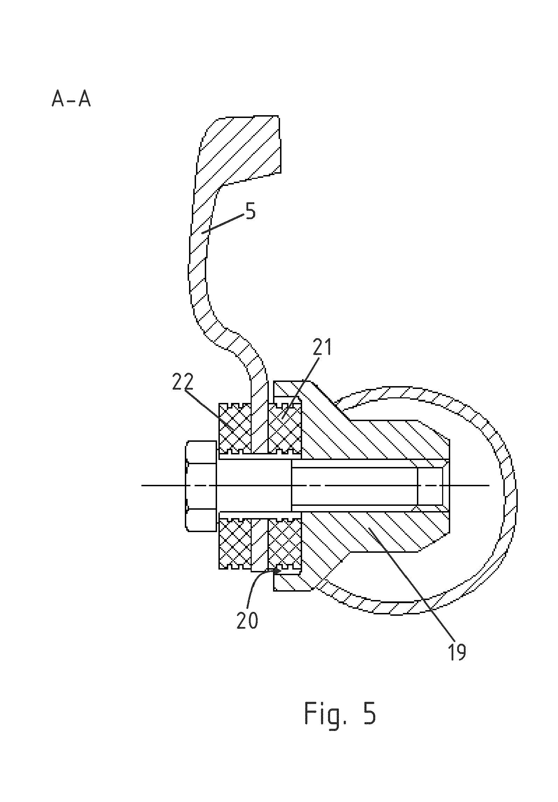

Figur 5 zeigt weiterhin eine Schnittansicht gemäß der Schnittlinie a-a aus Figur 2. Hier ist zu erkennen, dass die Aufnahme 19 einen trichterförmigen Verlauf aufweist und eine Aufnahmenut 20 zur Aufnahme einer innenliegenden Gummimetalllageranordnung 21 sowie die innere Gummimetalllageranordnung 21 aufweist. Weiterhin ist eine äußere Gummimetalllageranordnung 22 dargestellt, wobei zwischen die zwei Gummimetalllageranordnungen 21, 22 die Radaufnahme gekoppelt angeordnet ist. Beides wird von der Bolzenschraube durchgriffen, so dass eine formschlüssige Koppelung an die Längsschwinge 3 erfolgt, jedoch über die Gummimetalllagerung eine Elastizizät zum Schwenken der Radaufhängung verbleibt.

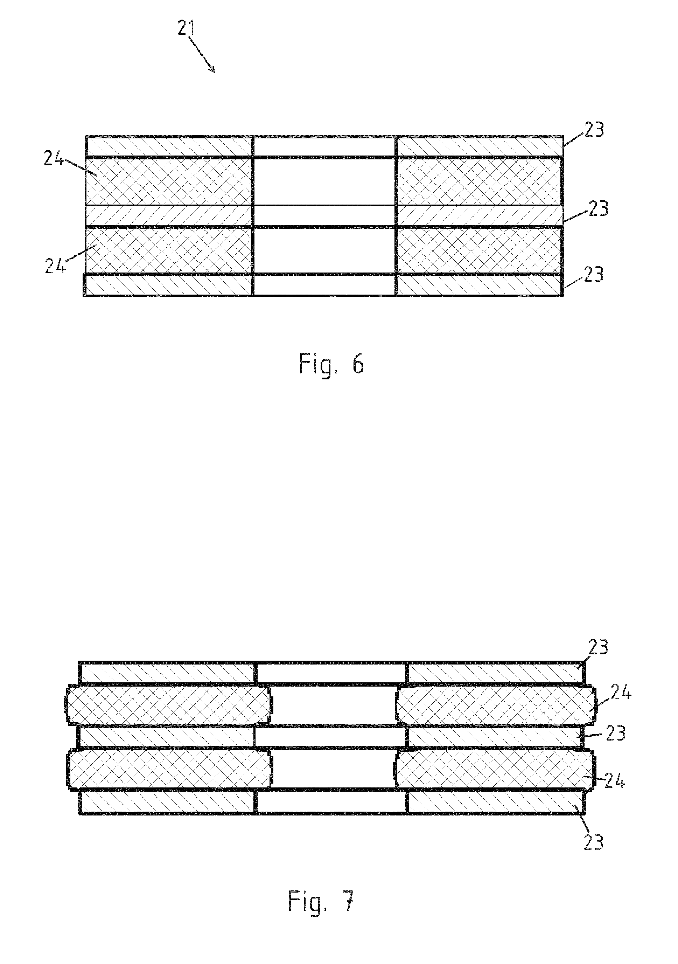

Figur 6 zeigt eine Detaillansicht durch eine erfindungsgemäße Gummimetalllageranordnung 21, wobei drei Metallscheiben 23 übereinander angeordnet sind und zwischen den Metallscheiben 23 eine Gummischicht 24 ausgebildet ist.

Gemäß Figur 7 kann die Gummimetalllageranordnung 21 bereits vorgespannt sein, so dass die Gummischicht 24 über die Metallscheiben 23 vorstehend ausgebildet ist.

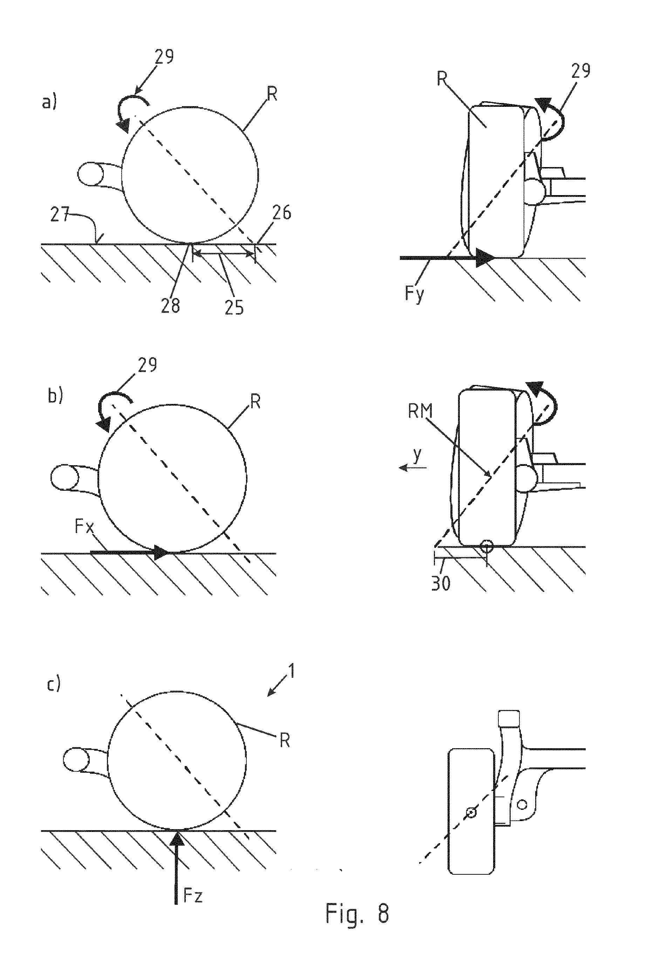

Figur 8 zeigen drei verschiedene Krafteinwirkungen auf das Rad R mit einer erfindungsgemäßen Kraftfahrzeugachse 1. In Figur 8a wird eine Kurvenfahrt exemplarisch dargestellt, wobei eine negative Nachlaufstrecke 25 zwischen dem Schnittpunkt 9 der virtuellen Längsachse 13 und der Fahrbahnoberfläche sowie der Radaufstandsfläche ausgebildet ist. In Folge einer Seitenkrafteinwirkung erfolgt eine Drehung des Rades R um die virtuelle Längsachse 13 in Vorspur.

Figur 8b zeigt die erfindungsgemäße Kraftfahrzeugachse 1 unter der Einwirkung einer Bremskraft Fx. Hierbei wirkt eine Bremskraft Fx auf das Rad R, wobei durch einen negativen Lenkrollradius 30, ausgebildet zwischen dem Radaufstandspunkt 28 sowie dem Schnittpunkt der virtuellen Lenkachse in Kraftfahrzeug Y-Richtung Y eine Drehung um die Lenkachse, sodass das Rad R eine Vorspurkorrektur erfährt.

Figur 8c zeigt die Einwirkung einer Vertikalkraft Fz auf das Rad R einer erfindungsgemäßen Kraftfahrzeugachse 1. Hierbei erfährt das Rad R keine relative Verschiebung um die virtuelle Lenkachse.

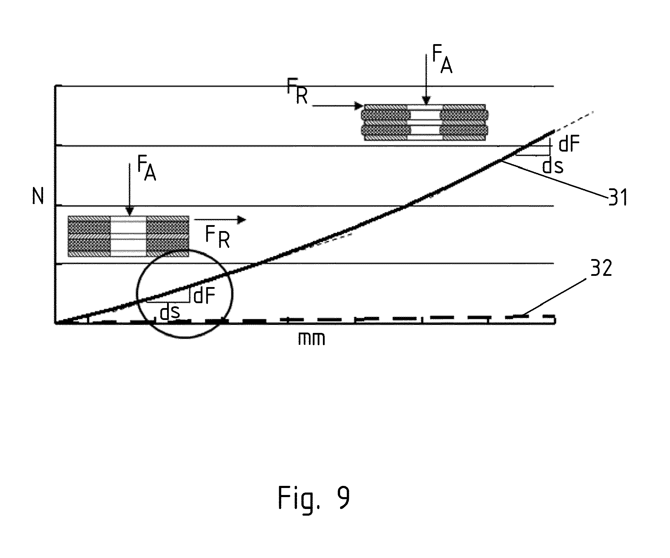

Figur 9 zeigt eine Federkennlinie der Gummimetalllageranordnung, wobei die durchgezogene Linie den Verlauf der Axialsteifigkeit 31 zeigt und die gestrichelte Linie den Verlauf der Radialsteifigkeit 32. Bei erhöhter Axialkrafteinwirkung Fa erfolgt eine progressive Zunahme der Axialsteifigkeit 31, wohingegen nur eine linear verlaufende, minimale Zunahme der Radialsteifigkeit 32 erfolgt. Hierüber lässt sich das Verhältnis von Radial- zu Axialsteifigkeit (31,32) durch die Vorspannung der Gummimetalllageranordnung im eingebauten Zustand an der Achse beeinflussen.

### Bezugszeichen:

- 1 -: Kraftfahrzeugachse
- 2 -: Torsionsprofil
- 3 -: Längsschwinge
- 4 -: Ende zu 3.
- 5 -: Radaufhängung
- 6 -: Schwenklager
- 7a -: vorderes Gummitmetalllager
- 7b -: hinteres Gummimetalllager
- 8a -: Längsachse zu 7a
- 8b -: Längsachse zu 7b
- 9 -: Federschwerpunkt
- 10 -: virtuelle Lenkachse
- 11 -: Rotationsfreiheitsgrad
- 12 -: Raddrehachse
- 13 -: Längsachse
- 14 -: Aufhängungslager
- 15 -: Schraubbolzen
- 16 -: Flanschbereich
- 17 -: Montageöffnung
- 18 -: umlaufende Verstärkungskante
- 19 -: Aufnahme
- 20 -: Aufnahmenut
- 21 -: innere Gummimetalllageranordnung
- 22 -: äußere Gummimetalllageranordnung
- 23 -: Metallscheibe
- 24 -: Gummischicht
- 25 -: negative Nachlaufstrecke
- 26 -: Schnittpunkt
- 27 -: Fahrbahnoberfläche
- 28 -: Radaufstandspunkt
- 29 -: Drehung in Vorspur
- 30 -: negativer Lenkrollradius
- 31 -: Axialsteifigkeit
- 32 -: Radialsteifigkeit

- R -: Rad
- RM -: Radmittelpunkt
- Fx -: Bremskraft
- Fy -: Seitenkraft
- Fz -: Vertikalkraft
- Fa -: Axialkraft
- Fr -: Radialkraft
- Y -: Kraftfahrzeug Y-Richtung
- F -: Fahrtichtung
- α -: Winkel

## Patentansprüche

1. Kraftfahrzeugachse (1), insbesondere Verbundlenkerhinterachse, welche aus einem Torsionsprofil (2) mit daran angebundenen Längsschwingen (3) ausgebildet ist, wobei an den freien Enden (4) der Längsschwingen (3) jeweils eine Radaufhängung (5) zur Koppelung eines Rades (R) über mindestens eine elastische Lagerung gekoppelt ist, so dass die Radaufhängung (5) um eine virtuelle Lenkachse (10) schwenkbar gekoppelt ist, **dadurch gekennzeichnet, dass** die Radaufhängung (5) über ein Schwenklager (6) mit mindestens einem Rotationsfreiheitsgrad (11) und über zwei Gummimetalllager (7a, 7b) mit der Längsschwinge (3) gekoppelt ist, wobei der Rotationsfreiheitsgrad (11) um die virtuelle Lenkachse (10) dreht und dass die Gummimetalllager (7a,7b) einen Federschwerpunkt (9) bilden, der auf das Kraftfahrzeugkoordinatensystem bezogen außerhalb des Kraftfahrzeuges liegt, wobei die Lenkachse (10) den Federschwerpunkt und das Schwenklager (6) schneidet, wobei ein Gummimetalllager (7a, 7b) aus zwei Gummimetallscheibenanordnungen (21, 22) ausgebildet ist, wobei die Gummimetallscheibenanordnungen (21, 22) jeweils an einer Seite der Radaufhängung (5) angeordnet sind und zusammen mit dieser von einem Schraubbolzen (15) formschlüssig durchgriffen sind und dass zumindest eine Gummimetallscheibenanordnung (21, 22) aus drei Metallscheiben (23) aufgebaut ist, wobei zwischen die Metallscheiben (23) eine Gummischicht (24) eingebracht ist.

2. Kraftfahrzeugachse nach Anspruch 1, **dadurch gekennzeichnet, dass** die virtuelle Lenkachse (10) derart positioniert ist, dass eine negative Nachlaufstrecke (25) vorhanden ist und/oder dass die virtuelle Lenkachse (10) derart positioniert ist, dass ein negativer Lenkrollradius (30) vorhanden ist.

3. Kraftfahrzeugachse nach Anspruch 1 oder 2, **dadurch gekennzeichnet, dass** die Lenkachse (10) den Radmittelpunkt (RM) schneidet.

4. Kraftfahrzeugachse nach einem der Ansprüche 1 bis 3, **dadurch gekennzeichnet, dass** auf das Kraftfahrzeugkoordinatensystem bezogen das Schwenklager (6) oberhalb der Gummimetalllager (7a, 7b) angeordnet ist, vorzugsweise oberhalb des Radmittelpunktes.

5. Kraftfahrzeugachse nach einem der Ansprüche 1 bis 4, **dadurch gekennzeichnet, dass** das Schwenklager (6) ein Kugelgelenk ist.

6. Kraftfahrzeugachse nach einem der Ansprüche 1 bis 5, **dadurch gekennzeichnet, dass** das in Fahrtrichtung (F) hintere Gummimetalllager (7b) mit seiner Längsachse (8b) im Wesentlichen parallel zur Raddrehachse (12) orientiert ist.

7. Kraftfahrzeugachse nach einem der Ansprüche 1 bis 6, **dadurch gekennzeichnet, dass** das in Fahrtrichtung (F) vorne liegende Gummimetalllager (7a) mit seiner Längsachse (8a) in einem Winkel (α) zu der Raddrehachse (12) angeordnet ist.

8. Kraftfahrzeugachse nach einem der Ansprüche 1 bis 7, **dadurch gekennzeichnet, dass** die Radaufhängung (5) ein einschaliges Blechbauteil ist.

9. Kraftfahrzeugachse nach einem der Ansprüche 1 bis 8, **dadurch gekennzeichnet, dass** die Gummimetalllager (7a, 7b) vorgespannt sind, wobei die Gummischicht (24) zumindest bereichsweise gegenüber den Metallscheiben (23) vorsteht.

10. Kraftfahrzeugachse nach einem der Ansprüche 1 bis 9, **dadurch gekennzeichnet, dass** unter Einfluss von Bremskraft (Fx) eine Vorspurkorrektur erfolgt und bei Kurvenfahrt das kurvenäußere Rad (R) in Vorspurkorrektur und das kurveninnere Rad (R) in Nachspurkorrektur verstellbar sind.

11. Kraftfahrzeugachse nach einem der Ansprüche 1 bis 10, **dadurch gekennzeichnet, dass** durch Vertikalkrafteinfluss (Fz) auf das Rad (R), insbesondere beim parallelen Einfedern oder Ausfedern der Räder (R), keine relative Spurkorrektur zwischen Längsschwinge (3) und Radaufhängung (5) erfolgt.

12. Kraftfahrzeugachse nach einem der Ansprüche 1 bis 11, **dadurch gekennzeichnet, dass** ein Gummimetalllager (7a,7b) jeweils eine Radialsteifigkeit (32) und eine Axialsteifigkeit (31) aufweist, wobei das Verhältnis von Radialsteifigkeit (32) zu Axialsteifigkeit (31) zwischen 1:30 bis 1:50, vorzugsweise 1:35 bis 1:45 und insbesondere 1:40 ausgebildet ist.

13. Kraftfahrzeugachse nach dem vorhergehenden Anspruch, **dadurch gekennzeichnet, dass** die Axialsteifigkeit (31) progressiv zunehmend ausgebildet ist.

14. Kraftfahrzeugachse nach einem der Ansprüche 1 bis 13, **dadurch gekennzeichnet, dass** an die Radaufhängung (5) ein Radträger anschraubbar ist, wobei der Radträger vorzugsweise an der Radaufhängung (5) relativ justierbar ist.

15. Kraftfahrzeugachse nach einem der Ansprüche 1 bis 14, **dadurch gekennzeichnet, dass** die Radaufhängung (5) gegenüber der Längsschwinge (3) justierbar ist. Vorzugsweise über einen exzentrischen Versatz des Schwenklagers (6).
